# EUROPEAN PATENT APPLICATION

(11) **EP 1 645 456 A2**
(43) Date of publication of application: **12.04.2006**
(21) Application number: 05255746.9
(22) Date of filing: 16.09.2005
(51) Int. Cl.: B60L 15/20, A01D 69/02, A01D 34/00, A01D 34/78

(54) **Multifunction electric tractor**

(30) Priority: 20.09.2004 US 945340
(71) Applicant: Edmond, Brian Wilfred, Amherstview, ON K7N 1J4 (CA)
(72) Inventor: Edmond, Brian Wilfred, Amherstview, ON K7N 1J4 (CA)
(74) Representative: Haley, Stephen

(57) **Abstract**

A multifunction electric tractor (10) is disclosed. The tractor (10) includes a tractor frame (14). The tractor frame (14) includes a front end (16) and a rear end (17). An implement (72) is connected to the frame (14) and has a moving part (76). A sensor (104) is adapted to monitor a motion-related property of the moving part (76). A signal generator (107) is in communication with the sensor (104). The signal generator (107) generates motion data signals indicative of a current status of the motion-related property. A controller (108) is in communication with the signal generator (107). The controller (108) generates a response affecting the operation of the tractor (10) based at least in part on the motion data signals.

## Description

The present invention relates to multifunction land vehicles and, in particular, electric lawn and garden tractors adapted for implement attachment.

Most lawn and garden tractors in use today are powered by gasoline. The noise and fumes of a gasoline powered lawn and garden tractor can be obtrusive, especially since many lawn and garden tractors are used around buildings and people. Several attempts have been made to provide an electric lawn and garden tractor powered by rechargeable batteries.

The ELEC-TRAK E15™ is an electric lawn and garden tractor that was manufactured by General Electric. Six rechargeable batteries provided the power supply for this tractor. A front mounted mower included three electric motors, each associated with a cutting blade. During winter, the mower could be removed and replaced with a snowblower.

Electric tractors have previously been patented. An example is the battery-powered electric tractor disclosed in U.S. Patent 4,662,472 of Christianson et al. Industrial grade lead-acid batteries for powering the tractor are installed in two units of 32 cells to provide a nominal operating voltage of 128 Volts. A first electric motor is mounted to a rear frame member. This motor is used to drive the tractor wheels. A second electric motor is mounted to a front frame member. This electric motor is used to drive a power-take-off shaft and hydraulic articulation apparatus.

U.S. Patent No. 5,743,347 of Gingerich et al. discloses a lawn and garden tractor having independent electric motors for both driven wheels. Each of the rear wheels are provided with a respective speed sensor. A control system in the tractor feeds extra power to one of the two motors when a wheel encounters an obstacle (e.g. a log). A Weed Eater™ can be plugged into the tractor and placed on a rack for periodic use in association with the tractor.

It is an object of the present invention to provide an improved multifunction electric tractor.

According to one aspect of the invention, there is provided a tractor including a tractor frame. The tractor frame includes a front end and a rear end. An implement is connected to the frame and has a moving part. A sensor is adapted to monitor a motion-related property of the moving part. A signal generator is in communication with the sensor. The signal generator generates motion data signals indicative of a status of the motion-related property. A controller is in communication with the signal generator. The controller generates a response affecting the operation of the tractor based at least in part on the motion data signals.

In a preferred embodiment, the tractor further comprises a plurality of batteries mounted on the frame for providing operating power for the tractor.

According to another aspect of the invention, there is provided a system for a land vehicle such as a tractor. The vehicle includes an implement having a moving part. The system includes a sensor adapted to monitor a motion-related property of the moving part. A signal generator is in communication with the sensor. The signal generator generates motion data signals indicative of a current status of the motion-related property. A controller is in communication with the signal generator. The controller generates a response affecting the operation of the vehicle based at least in part on the motion data signals.

According to another aspect of the invention, an electric lawn and garden tractor comprises a tractor frame having a front end and a rear end. An axle is connected to the frame at the rear end. Two wheels are rotatably mounted on the axle. A gear housing is attached to the axle. A differential gear is within the gear housing. The differential gear is in mechanical communication with the two wheels. A motor is attached to the axle. The motor is in mechanical communication with the differential gear. The motor directly drives both the wheels through the differential gear.

In a preferred embodiment, the lawn and garden tractor further comprises a speed controller attached to the frame. The speed controller is in electrical communication with the motor. The speed controller controls the movement speed and direction of the lawn and garden tractor.

The multifunction electric tractor according to the present invention can be configured for automatic reduction of the speed of the tractor to a speed which should permit the tractor's mower to properly cut grass.

The multifunction electric tractor according to the present invention operates at a low noise level as compared to gas powered tractors.

The system according to the present invention can operate in conjunction with a variety of implements including mowers, show blowers and power tillers, in order to slow the tractor forward speed when the grass, snow, soil or clay gets heavy.

These and other advantages of the invention will become apparent upon reading the following detailed description and upon referring to the drawings in which:
Figure 1 is a diagrammatic illustration showing, in plan, a multifunction electric tractor and mower according to an embodiment of the invention;
Figure 2A is a cross-sectional and elevational view of an alternative embodiment of a mower suitable for attachment to the electric tractor of Figure 1;
Figure 2B is a top cross-sectional view of the mower of Figure 2A;
Figure 2C is a cross-sectional and elevational view of another mower suitable for attachment to the electric tractor of Figure 1;
Figure 3 is a schematic, block diagram showing a control system for the electric tractor of Figure 1; and
Figure 4 is a schematic diagram of control circuitry for the electric tractor of Figure 1.

While the invention will be described in conjunction with illustrated embodiments, it will be understood that it is not intended to limit the invention to such embodiments. On the contrary, it is intended to cover all alternatives, modifications, and equivalents as may be included within the spirit and scope of the invention as defined by the appended claims.

In the following description, similar features in the drawings have been given similar reference numerals.

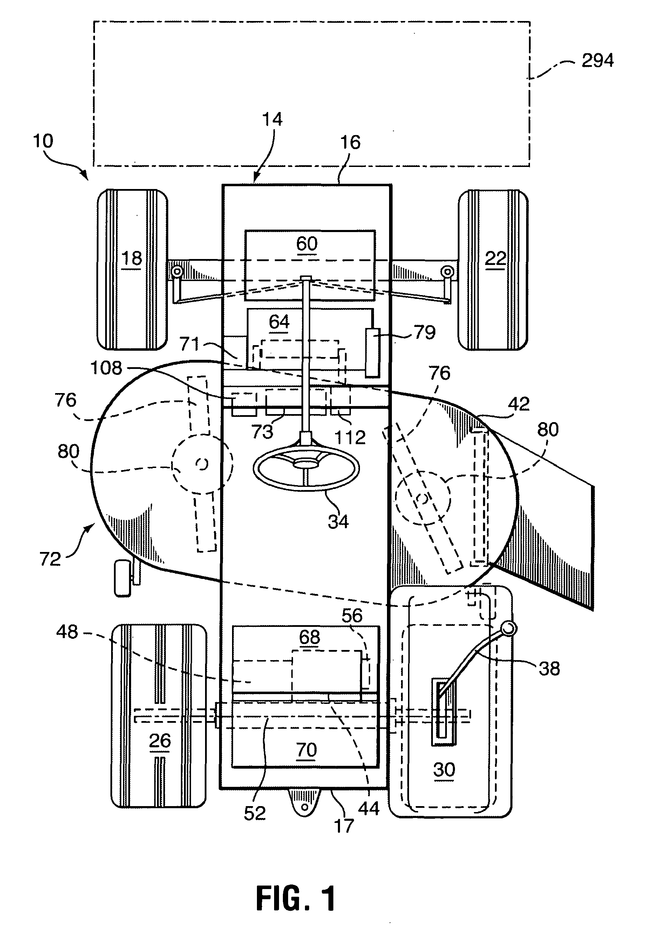

Figure 1 is a diagrammatic plan view of an electric tractor 10 constructed in accordance with an embodiment of the invention. Those skilled in the art of tractor mechanics will understand that the invention disclosed in this application can be incorporated into many different types of tractors; however various parts of the tractor 10, including frame 14 (having a front end 16 and a rear end 17), front wheels 18 and 22, rear wheels 26 and 30, steering wheel 34, lift lever 38, and cutter deck 42, can be the parts shown and illustrated in the Poulan Pro™ parts manual for lawn tractor model PR17542STA (available from Electrolux Home Products of North America), the contents of which are incorporated herein by reference.

The wheels 26 and 30 are the driven wheels of the tractor 10. Mechanical energy is supplied to these driven wheels by a drive mechanism that includes a motor 44, a differential gear within gear housing 48 and a second gear (non-differential) within the gear housing 48. The drive mechanism is attachable to the frame 14. The motor 44 and the gear housing 48 are installed adjacent each other, along the periphery of the axle 52. The reduction gears from the motor to the drive wheels are permanently in mesh.

Both of the wheels 26 and 30 are driven by the motor 44. More specifically, the motor 44 directly drives both the wheels 26 and 30 via interaction with the differential gear. It will be appreciated by one skilled in the art that the drive mechanism of the tractor 10 incorporating the parts described in this application can be constructed to drive the wheels 26 and 30 at different speeds even though there is only a single drive motor. The drive mechanism could alternatively be constructed using belts, chains and sprockets, friction wheel rollers and cones, or a combination of these; however this would add more moving parts to the tractor 10, and therefore maintenance costs of such a tractor might be higher.

An electro/mechanical brake 56 is mounted at an end of the motor 44. The brake 56 constitutes part of the braking system of the tractor 10, which also includes an electrical brake. The brake 56 brakes the wheels 26 and 30 by acting on the axle 52. A mechanical manual release lever is in communication with the brake 56.

Batteries providing the power that is needed to operate the tractor 10 are housed in the frame 14. Batteries 60 and 64 are housed proximate the front end 16. Batteries 68 and 70 are housed proximate the rear end 17. These batteries can be 12 Volt, 130 A·h deep-cycle lead acid batteries. It will be understood that nickel-cadmium or lithium-ion batteries could be a suitable alternative to lead acid batteries. Other means of storing or generating electricity are also envisioned, such as a small hydrogen fuel cell.

An electrical cord can be attached to plug/socket 71 for recharging the batteries from a standard power outlet. When the batteries are fully charged, the tractor 10 can be used to cut a lawn for approximately 2 to 3 hours if the batteries are delivering approximately 2 horsepower. An optional inverter 73 can be housed within the frame 14. The inverter 73 provides one or more 110V or 220V power outlets at 50 or 60Hz (more or less if required), and can facilitate the use of a Weed Eater™, Skil Saw™, snowblower or other types of power tools in conjunction with the operation of the tractor 10. It can also facilitate the use of a gas/oil furnace, fridge or water pump in conjunction with the operation of the tractor 10.

In the illustrated embodiment, a mower 72 is attached to the frame 14 so as to be suspended beneath it. It will be appreciated that with appropriate modifications the mower could be mounted in other positions, such as adjacent the front, rear or side of the tractor, or also on a movable arm for applications requiring cutting of ditches, hedges, etc. The mower 72 includes the cutter deck 42 and a plurality of cutter blade means or cutters 76 which are the moving parts of the mower 72. The cutter deck 42 is held above the ground at least in part by a shock absorber which softens deck impact with objects. The cutters 76 are directly driven by cutter motors 80. Power to the mower 72 (or an alternative implement previously mentioned) can be delivered by means of a single power cord which attaches to a 48V DC power outlet 79 within the frame 14. It will be understood that the inverter 73 is intended for lower power implements.

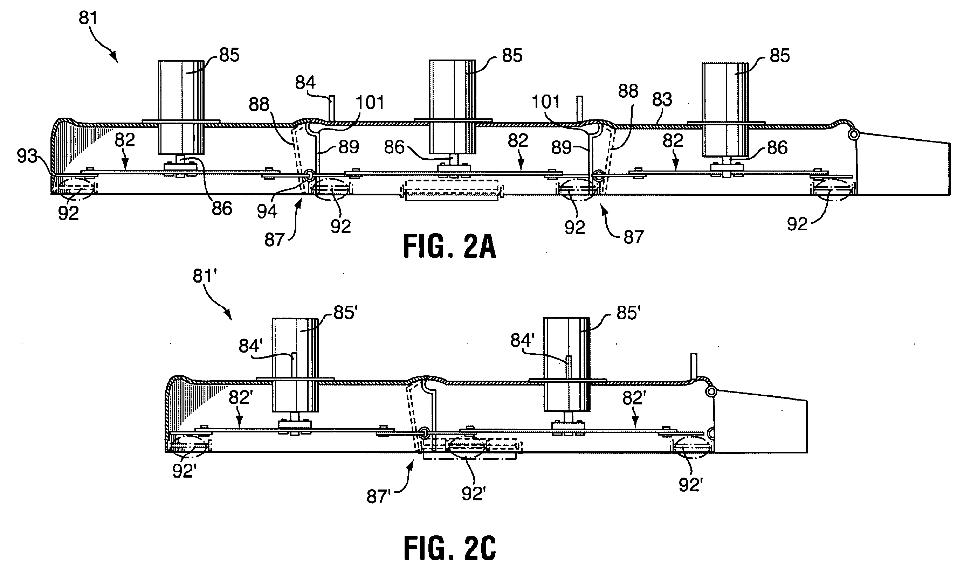

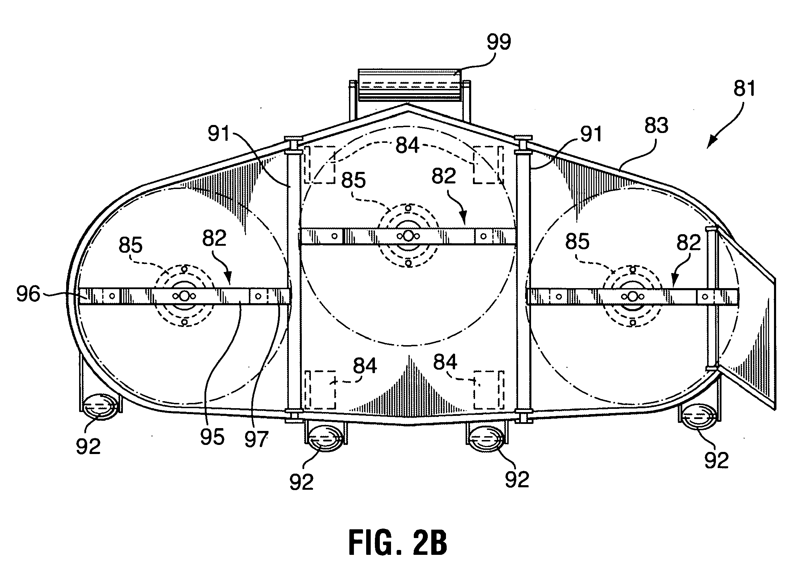

Figures 2A and 2B illustrate a mower 81 suitable for attachment to the tractor 10, and different from the mower illustrated in Figure 1. While the mower 72 shown in Figure 1 has two cutters 76, the mower 81 has three cutter blade means or cutters 82. The tractor constructed in accordance with the invention can have an arbitrary number of cutters; however additional cutters require additional motors increasing overall power consumption.

Cutter deck 83 of the mower 81 is suspended from the tractor by metal brackets 84, which can be made of aluminum. In one embodiment, the mower 81 is suspended below the frame of the tractor, in front of the rear wheels and behind the front wheels. Three spaced apart motors 85 extend vertically through the cutter deck 83. Each of the cutters 82 are rotatably mounted on a different motor shaft 86 of the motors 85, and thus the motors 85 directly drive the cutters 82.

In one embodiment, each of the motors 85 can deliver approximately 0.5 horsepower to the driven cutter 82. This corresponds to relatively low energy consumption for the mower 81.. This is advantageous given that the motors 85 are powered by batteries.

Each of the cutters 82 are elongate and have ends 93 and 94. While the ends 93 and 94 of the cutter 82 are steel, a central portion of the cutter 82 is at least one aluminum bar 95. Steel blades 96 and 97 are attached to the ends of the aluminum bar 95 by a suitable connection means such as nuts and bolts. The steel blades 96 and 97 can be approximately 4 inches long, and they can be knocked laterally out of alignment with the aluminum bar 95 when contact is made with a rigid object, thus facilitating reduced damage to the blades.

It will be appreciated that the aluminum bar 95 is lighter than an alternative metal bar (e.g. a steel bar). The aluminum bar 95 thus permits a lighter blade means, and thus reduces energy consumption of the mower. Other types of blades means are possible; however blade means having so called "curve tip" design may be inefficient, and possibly not suitable if the cutter motors are low horsepower. One skilled in the art will appreciate that horsepower, speed and blade length should be matched to each other.

Hinge means 87 divide the mower 81 into three sections and, in one embodiment, include pivot bolts and brass bushings for swiveling. The hinge means 87 provide an axis of rotation for adjacent sections which extends from the front to back of the mower 81 when the mower 81 is attached to the tractor. The hinge means 87 permit pivoting of the adjacent sections about the aforementioned axis. The sections pivot to provide better grass cutting when the mower 81 proceeds over unleveled ground, for example along a ditch. (Mower 72 of Figure 1 does not have these deck section hinge means).

Cutter deck overlaps 91 prevent the interior of the mower 81 from being exposed when the sections pivot. Ridges 101 stop the outer sections from pivoting too far. It will be understood that the mower 81 can also have locking means to lock the cutter deck 83 in a rigid position if desired.

A plurality of guide rollers 92 reduce friction between the mower 81 and the adjacent ground as the tractor is driven over grass. These guide rollers are adjustable to adjust the length at which the grass is cut. There is also a large guide roller 99 at the middle of the front of the mower 81. The guide roller 99 and the guide rollers 92 are attached around the periphery edges of the cutter deck 83.

Figure 2C illustrates a mower 81' similar to the mower 81, but having two sections instead of three sections. Motors 85' and cutters 82' can be the same as the motors 85 and the cutters 82 respectively, and mechanically connected together in the same manner. Hinge means 87' can be constructed in substantially the same manner as the hinge means 87. Guide rollers 92' can be the same as the guide rollers 92.

Metal brackets 84' operate in the same manner as the metal brackets 84, but they suspend the mower 81' at different points than the brackets 84 suspend the mower 81. The brackets 84' suspend the mower 81' at points near the middle of the mower sections, while the brackets 84 suspend the mower 81 at points along the edges of the middle mower section.

As an alternative to what has been discussed, it would also be possible to have each of the cutters within their own deck, and these decks would be mounted on different parts of the tractor (e.g. one at the front or rear, one at each side, and one on a movable arm).

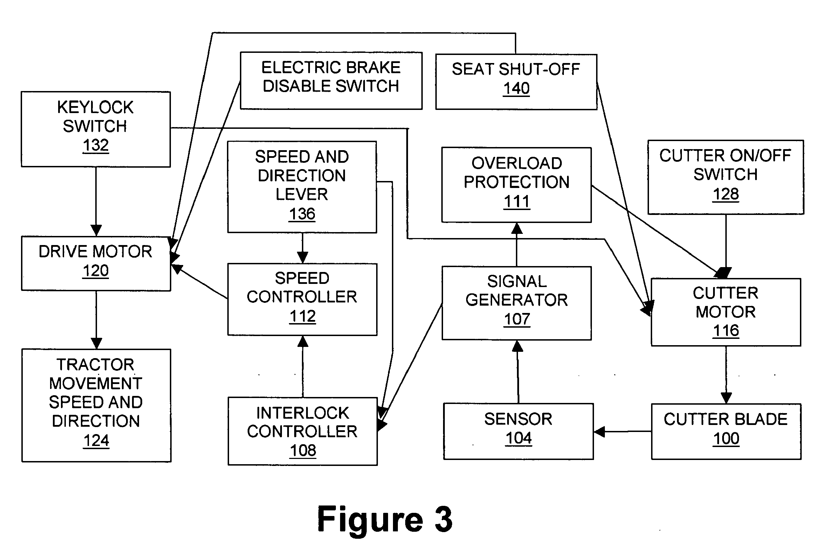

Figure 3 illustrates a control system for the tractor 10. As the arrows illustrate, the operation of drive motor 120 is dependant upon the keylock switch 132, seat shut-off mechanism 140, and speed controller 112. Operation of cutter motor 116 is dependant upon the switch 132, the seat shut-off mechanism 140 and a cutter on/off switch 128.

Turning switch 132 to the on position permits electrical energy from the tractor batteries to be delivered to various electrically powered components of the tractor. However even if the switch 132 is in an on position, the cutter motor 128 will not operate unless cutter on/off switch 128 is on and the operator is seated in his seat.

Once the switch 132 is in an on position, the drive motor 120 can be actuated to source mechanical energy to the wheels 26 and 30 (see Figure 1) which will result in tractor movement. The speed at which the tractor 10 moves is directly related to the amount of mechanical energy delivered by the drive motor 120 per unit time.

A manually adjustable speed and direction lever 136 is provided on the tractor 10 at a location accessible by a driver of the tractor (e.g. on the tractor control panel or adjacent a seat in which the driver is sitting). The lever 136 communicates to the speed controller 112 the desired tractor movement speed. Based on the desired tractor movement speed, the speed controller 112 controls the electrical power delivered to the drive motor 120. If the electrical power delivered to the drive motor 120 is at a maximum, tractor movement speed 124 will be at its highest for the associated terrain. Likewise if the electrical power delivered to the drive motor 120 is low, the tractor movement speed 124 will be correspondingly low.

The speed controller 112 may be, for example, a known device of KB Electronics, Inc. (Model KBC-44M). This particular speed controller can be configured to provide acceleration and deceleration timers. For example, with this speed controller installed, the tractor 10 can have an acceleration timer requiring 15 seconds to elapse before the tractor can go from rest to maximum speed. As will be appreciated by one skilled in the art, other types of speed controllers can be used instead. In a preferred embodiment of the invention, the speed controller employed is an electronic pulse width modulated speed controller.

The speed controller 112 receives input from not only the lever 136, but also from interlock controller 108. The speed controller 112 and the interlock controller 108 can be housed under the dashboard, near the front end 16 of the tractor 10 (see Figure 1).

A cutter blade 100 is rotated by operation of the cutter motor 116. Power to the cutter motor 116 can be supplied or removed by turning on or off the cutter on/off switch 128. Power can also be removed from the cutter motor 116 by means of the seat shut-off mechanism 140, the switch 132 or overload protection circuit 111.

The seat shut-off mechanism 140 operates so as to prevent continued operation of the tractor 10 if the operator is no longer sitting in the driving seat of the tractor. This is a safety feature, as the driver no longer being seated in the driver seat could correspond to a situation where the driver has fallen off of the tractor 10. The shut-off mechanism 140 includes a seat switch. Once the shut-off mechanism 140 is actuated, electrical power supply to the drive motor 120 and the cutter motor 116 is discontinued. Also, an electrical brake is actuated to bring the tractor 10 to a quicker stop and acts as a parking brake.

A sensor 104 is a component of apparatus for determining whether or not the cutter blade 100 is cutting through particularly long grass. The sensor 104 monitors a motion-related property of the cutter blade 100. Different types of suitable sensors can be constructed. The sensor 104 could monitor the cutter motor current, or it could measure the speed of the blade 100. Alternatively, the sensor 104 could measure sound frequencies from the motor, or it could measure the rate of shaft revolution by means of a tachometer. It will be appreciated that the tachometer could be of the type comprising a light beam reflected on the rotating shaft. In addition, other types of sensors are possible.

Signals from the sensor 104 are inputted into an operational amplifier-based circuit. In one embodiment, the operational amplifier-based circuit includes a 100 times inverting amplifier, a number of difference amplifiers and a number of gates. This circuit produces signals which depend upon inputted signals generated by a signal generator 107 and a speed pot direction setting set by the lever 136.

A measurement of current flow into the cutter motors is obtained by taking a measurement across a shunt. This measurement is inputted into a difference amplifier which has a set point at a value corresponding to a normal cutter motor current measurement. The outputted signal (which will be in the -25 mV to 0 mV range) is inputted into a 100 times inverting amplifier. The signal outputted from the inverting amplifier is processed in two different sub-circuits of the interlock controller 108, one corresponding to forward direction motion and another corresponding to reverse direction motion.

In the forward direction sub-circuit, the signal from the 100 times inverting amplifier is inputted into a difference amplifier which has a set point corresponding to the speed pot direction setting of the lever 136 (2.5V - 5V ⁺/₋ 0.3V is the range for forward motion). The output of this sub-circuit is checked by a number of gates to see if it is a valid signal (i.e. corresponding to forward motion and within the allowable voltage range). The output will equal the set point less the value of the 100 times inverting amplifier output. If the output is a valid signal, it can be transmitted to the speed controller 112.

In the reverse direction sub-circuit, the signal from the 100 times inverting amplifier is again inputted into a difference amplifier which adds this signal to the speed pot signal. The speed pot has a set point corresponding to the speed pot direction setting of the lever 136 (0V - 2.5V ⁺/₋ 0.3V is the range for reverse motion with 0V corresponding to maximum reverse speed). The output of this sub-circuit is checked by a number of gates to see if it is a valid signal (i.e. corresponding to reverse motion and within the allowable voltage range). If the output is a valid signal, it can be transmitted to the speed controller 112. If neither output of the sub-circuits is valid, a signal of 2.5V is transmitted to the speed controller 112 (corresponding to a neutral movement signal). In this situation, the tractor is effectively in neutral.

The signal generator 107 of the operational amplifier-based circuit generates motion data signals indicative of a current status of the motion-related property. The signal generator 107 of the above described operational amplifier-based circuit includes the difference amplifier with the set point at the normal cutter motor current measurement value and the 100 times inverting amplifier.

It will be appreciated that the signals from the signal generator 107 can be used in a motor overload protection circuit 111, as a sufficiently large signal from the signal generator corresponds to motor overload. This cutter overload protection circuit will provide means to initiate a shut-off of the cutter motors by transmission of a trip signal if the current sourced to the cutter motors is too high. Cutter motor overload could occur in certain situations such as when a steel cable becomes wrapped around one of the cutters.

The interlock controller 108 processes the motion data signals of the signal generator and can generate a response affecting the operation of the tractor. Responses such as adjusting speed signals to the speed controller 112 to adjust the electrical power delivered to the drive motor 120, and also possibly actuating alerting means are desirable. The electrical power to the drive motor 120, and hence the speed of the tractor, will be reduced if it is determined that the cutter blade 100 is encountering long grass. An alternative event would of course be the blades of a snowblower or a power tiller encountering heavy snow or dirt/clay respectively. Likewise electrical power to the drive motor 120 and the tractor speed will be increased when it is determined that the cutter blade 100 is no longer encountering particularly long grass. In the cutter motor current sensing embodiment, once motor current returns to near normal, tractor speed is allowed to return to the operator selected speed.

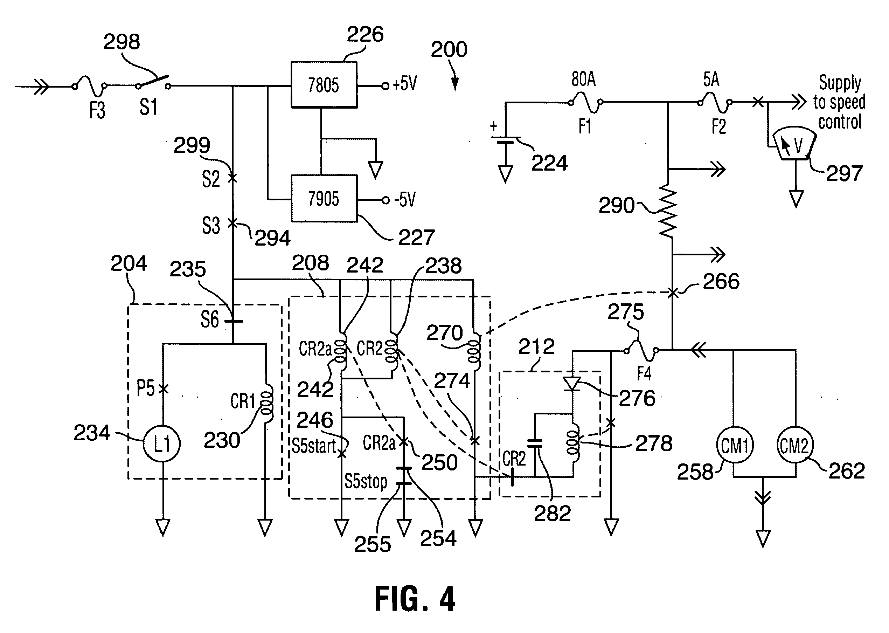

Figure 4 is a circuit diagram illustrating circuitry 200 of the control system of the tractor 10. The circuitry 200 includes drive control circuitry 204, cutter control circuitry 208 and blade brake circuitry 212. Power supplies illustrated in Figure 4 are 12V power supply 216, 48V, 50A power supply 224 and a +5V output from 7805 IC 226 and a -5V output from 7809 IC 227. The power supply provided by the ICs 226 and 227 is a dual type.

The drive control circuitry 204 includes a control relay 230, a dashboard indicator light 234, a normally closed contact of a brake petal limit switch 235, and a normally open contact of a limit switch P5 (KBC-44M interrupt fault relay). The tractor 10 has a brake petal which when depressed opens the switch 235. The opening of the switch 235 results in stopping the current flow through the right branch of the circuitry 204, and the relay 230 is denergized. The normally open contacts of the control relay 230 open, removing the 48V supply to P1-3 terminal of the KBC-44M speed controller, and the drive motor is brought to a stop as the brake is applied.

The cutter control circuitry 208 includes a control relay 238 and an auxiliary control relay 242. Normally open contacts (N/O) 246 of a start push button switch are in parallel with N/O 250 of the relay 242, normally closed contact (N/C) 254 of a stop push button switch, and N/C 255 associated with the overload protection circuit 111, the N/O 250, the N/C 254 and the N/C 255 being connected in series, and the N/O 246 and the N/C 254 being two separate start and stop push button switches. The N/O 246 is momentarily closed to start the cutter motors. The N/C 254 is momentarily opened to stop the cutter motors.

The blade brake circuitry 212 is in electrical communication with cutter motors 258 and 262. The motors 258 and 262 are connected in parallel, and connected to the 48 V power supply 224 through N/O 266 of 70 A relay 270. When the relay 270 is energized, the motors 258 and 262 are connected to the power supply 224 and run. When the N/C 254 or the N/C 255 is opened, the relays 238 and 242 drop out, N/O 274 of the relay 238 opens opening the relay 270 thereby removing the power supply to the motors 258 and 262. At this point the motors still spinning at a relatively high speed function as generators and supply current through fuse 275 and diode 276 to energize the coil of the solenoid 278. Capacitor 282 charges keeping the solenoid 278 energized for approximately three seconds while the motors stops. The motors 258 and 262 stop in approximately one or two seconds because the heavy contacts of the solenoid 278 are shorting out the motors' generated voltage. The diode 276 prevents discharge of the capacitor 282 through the motors when the generated voltage falls below the capacitor voltage. The fuse 275 is a safety feature to prevent a short circuit in the even of a relay malfunction.

A shunt 290 permits a measurement of current flow from the 48V power supply 224 to the motors 258 and 262 to be obtained. This measurement is processed as previously described to determine if an adjustment of the tractor movement speed is required because long grass, heavy snow or heavy soil/clay is being encountered.

Referring to Figures 1 and 3, the power supply 224 also supplies power to the speed controller 112 and battery voltmeter 297. The seat shut-off 140 includes N/O 294 of a limit switch or relay. The shut-off mechanism 140 and an electric brake disable switch S2 remove voltage to the control relays 238 and 242. The keylock switch 132 includes switch 298. N/C 299 is associated with a manual disable lever of the drive motor electric brake. The N/C 299 opens when the brake is manually disabled.

The motors of the tractor 10 are relatively low horsepower motors. These motors preferably have a lower energy consumption per unit time than typical motors found in lawn and garden tractors. Use of low horsepower motors is possible because of a number of factors including motor overload protection incorporated into the design of the tractor's control circuitry and high energy efficiency of the tractor.

A disadvantage of gasoline-powered lawn and garden tractors is that the engine of the tractor will idle when the tractor is not in motion, thereby wasting gasoline. The tractor described in this application will, in one embodiment, consume no energy when the tractor and its cutter blades are not in motion.

Thus, it is apparent that there has been provided in accordance with the invention a multifunction electric tractor that fully satisfies the objects, aims, and advantages set forth above. While the invention has been described in conjunction with illustrated embodiments thereof, it is evident that many alternatives, modifications, and variations will be apparent to those skilled in the art in light of the foregoing description. For example, instead of the grass cutting blades 76, an electric motor driven snowblower or power tiller 294 (phantom Figure 1) may be releasably attached to the frame 14 of the tractor 10. Furthermore, instead of the batteries 60, 64, 68 and 70, other types of batteries, a fuel cell, an internal combustion engine or any type of portable electrical supply could provide the energy to operate the tractor. A hybrid-powered tractor is also envisioned. Accordingly, it is intended to embrace all such alternatives, modifications, and variations as fall within the spirit and broad scope of the invention.

## Claims

1. A tractor comprising:
a tractor frame having a front end and a rear end;
an implement connected to said frame and having a moving part;
a sensor adapted to monitor a motion-related property of said moving part;
a signal generator in communication with said sensor, said signal generator generating motion data signals indicative of a current status of the motion-related property; and
a controller in communication with said signal generator, said controller generating a response affecting the operation of said tractor based at least in part on said motion data signals.

2. A tractor as claimed in claim 1 further comprising a speed controller in communication with said controller.

3. A tractor as claimed in claim 2 wherein said response is an adjustment of speed signals to said speed controller effectuating an adjustment of tractor movement speed.

4. A tractor as claimed in claim 1 further comprising a pair of driven wheels and a drive mechanism attached to said frame for supplying mechanical energy to said driven wheels, and said implement further comprises a motor for directly driving said moving part.

5. A tractor as claimed in claim 1 wherein said implement is a mower, said mower comprising a cutter deck and cutter blade means rotatably mounted in said cutter deck.

6. A tractor as claimed in claim 5 wherein said cutter deck has at least two sections, the sections secured to each other by hinge means permitting relative pivoting of the sections along an axis, and said mower further comprises at least another cutter blade means rotatably mounted in said cutter deck.

7. A tractor as claimed in claim 6 wherein said axis is parallel to a longitudinal axis extending from said front end to said rear end of the tractor frame.

8. A system for a land vehicle such as a tractor, the vehicle including an implement having a moving part and the system comprising:
a sensor adapted to monitor a motion-related property of said moving part;
a signal generator in communication with said sensor, said signal generator generating motion data signals indicative of a current status of the motion-related property; and
a controller in communication with said signal generator, said controller generating a response affecting the operation of said vehicle based at least in part on said motion data signals.

9. An electric lawn and garden tractor comprising:
a tractor frame having a front end and a rear end;
an axle connected to said frame at said rear end;
two wheels rotatably mounted on said axle;
a gear housing attached to said axle;
a differential gear within said gear housing, said differential gear in mechanical communication with said two wheels; and
a motor attached to said axle, said motor in mechanical communication with said differential gear,
wherein said motor directly drives both said wheels through said differential gear.

10. A tractor as claimed in claim 9 further comprising a speed controller attached to said frame, said speed controller in electrical communication with said motor, wherein said speed controller controls the movement speed and direction of said tractor.
